# EUROPÄISCHE PATENTSCHRIFT

(11) **EP 0 979 719 B1**
(45) Veröffentlichungstag und Bekanntmachung des Hinweises auf die Patenterteilung: **06.11.2002**
(21) Anmeldenummer: 99115163.0
(22) Anmeldetag: 13.08.1999
(51) Int. Cl.: B29C 47/10, B29C 47/00, B29C 47/40

(54) **Verfahren und Plastifizierextruder zur Herstellung von faserverstärkten Kunststoffmassen**
Method and plastificating extruder for producing fiber-reinforced polymer compositions
Procédé et extrudeuse de plastification pour produire des compositions polymères renforcées par des fibres

(30) Priorität: 13.08.1998 DE 19836787
(43) Veröffentlichungstag der Anmeldung: 16.02.2000
(73) Patentinhaber: Maschinenfabrik J. Dieffenbacher GmbH & Co., 75031 Eppingen (DE)
(72) Erfinder: Therolf, Dieter, 71665 Vaihingen/Enz. (DE)
(74) Vertreter: Hartdegen, Anton

(56) Entgegenhaltungen:
- EP-A- 0 850 746
- DE-A- 4 016 784
- US-A- 5 358 680

## Beschreibung

Die Erfindung bezieht sich auf ein Verfahren zur Herstellung von faserverstärkten Kunststoffmassen gemäß dem Oberbegriff der Ansprüche 1 und 2. Sie betrifft ferner einen Plastifizierextruder zur Durchführung des Verfahrens nach Anspruch 13.

Ein solches Verfahren und ein solcher Plastifizierextruder ist aus DE-PS 40 16 784 bekannt geworden. Bei diesem Plastifizierextruder erfolgt der Faserstrangeintritt in die Imprägniervorrichtung und der Strangaustritt nach der Imprägnierung ebenflächig mit geringer Anpassungsfähigkeit an die Erfordernisse einer guten Faser- und Streugutbenetzung. Das Hauptproblem liegt jedoch darin, daß die Einzelfasern des breit auseinandergefächerten Faserstranges über die Spreiznocken sich nicht auseinander halten lassen. Die Einzelfasern werden durch die 90° Umlenkung von der Führung quer zur Schneckenachse an der Einführtülle, bis zum Ende des Imprägnierkanals und zu dem Schneckenelement der Extruderachse zu einem kompakten Strang zusammengeschnürt. Dies bedeutet, daß dieser kompakte Strang, bestehend aus vielen endlosen Einzelfasern, eine große Dicke ergibt, was zu einem schnellen abquetschen bzw. abschneiden zwischen den Schneckenstegen und der Zylinderwand führt.
Die dabei entstehenden Faserknäuel, welche noch nicht komplett durchtränkt sind lassen sich dann nur schwer, das heißt zum Teil überhaupt nicht, mit den Mischund Knetelementen wieder auflösen, um sie mit der Restschmelze zu vermischen oder die Misch- und Knet-/Scherstrecke muß so intensiv und/oder lang ausgeführt sein, daß dadurch im Produkt ein sehr hoher Anteil an sehr kurzen Fasern/Feinanteil entsteht.
Weiter ergibt sich dadurch ein schnelleres Abquetschen des kompakten Faserstranges und ein unkontrolliertes Schlupfverhalten der Einzelfasern. Es stellen sich unterschiedlich große Schlupfgeschwindigkeiten der Glasfaserstränge ein, welche einen prozeßfähigen Maschinenzustand äußerst schwierig gestalten bzw. nicht ermöglichen, das heißt es ergeben sich undefinierte Antriebsverhältnisse und unkontrollierbare Prozeßzustände.

### Folgende Nachteile lassen sich zusätzlich anführen:

Der vorimprägnierte Faserstrang muß noch in der Einmischzone mit den Einzelfasern homogen in der Schmelze verteilt werden.
Die mit flüssigem Kunststoff vorgetränkten Einzelfasern werden von dem jeweiligen Schneckenelement eingezogen und hierbei geschnitten bzw. abgequetscht. Dadurch ist die Antriebskraft, welche auf den Faserstrang ausgeübt werden kann relativ gering, weil kein ausreichend großer Umschlingungswinkel um die Extruderwellen entstehen kann. Auch damit entsteht ein großer undefinierter Schlupf der Fasern im Zuführbereich, weshalb der Fasergehalt im Kunststoff starken Schwankungen unterliegt. Die Geschwindigkeitsänderungen an dem zugeführten Faserstrang zu messen und diesen Fehler über eine Drehzahlregelung an den Extruderwellen zu kompensieren führt zu einer starken schädlichen Pulsation bei dem im Tränkbereich zugeführten aufgeschmolzenen Kunststoff und zur Pulsation im Mischbereich und damit beim Produktausstoß. Die angedachte Schmelzeregelung über die Drosseleinrichtung durch das verschiebbare Schneckengehäuse löst dieses Problem auch nicht, weil bei stark schlupfenden Einzelfasern die Drehzahl an der Extruderwelle erhöht werden müßte und dabei zwangsläufig mehr Matrixschmelze von der im Schneckenbereich befindlichen Schmelze gefördert wird. Das heißt das Mischungsverhältnis Faser zu Matrix verändert sich hierbei nachteilig. Des weiteren ist für die Produktverarbeitung und Materialreproduzierbarkeit neben der genauen Gewichtsverteilung des Glasfaseranteils zu dem Kunststoffanteil ein pulsationsfreier gleichmäßiger Produktausstoß erforderlich. Zusätzlich höchstes Ziel ist dabei, daß die Faserfeinanteile sehr niedrig gehalten werden. Dies wird mit den bisher bekannten Verfahren und Systemen nicht erreicht.

Der Erfindung liegt die Aufgabe zugrunde, ein Verfahren anzugeben und einen Plastifizierextruder zu schaffen, mit dem faserverstärkte Kunststoffmassen mit gutem Mischungsgrad und guter Durchtränkung der Fasern herstellbar sind, wobei die langen Fasern im Produkt einen möglichst großen Anteil und die Kleinst- bzw. Kurzfasern einen möglichst geringen Anteil aufweisen sowie der Produktausstoß stetig ohne Pulsation erfolgt.

Die Lösung dieser Aufgabe besteht für das Verfahren darin, daß folgende Verfahrensschritte zur Anwendung kommen:
a) der Faserstrang wird über zwei oder mehrere Beschichtungsdüsen in die Zuführöffnung des Plastifizierextruders mit seiner Breite b vorzugsweise parallel zu den Extruder-Achsen und annähernd tangential auf eine Extruderwelle und um die Extruderwellen vortreibend aufgewickelt sowie in Zylinderbohrungen von im Durchmesser um mindestens die vierfache Stärke S des Faserstranges vergrößerte Schneckenzylinder eingezogen,
b) in der Zuführöffnung erfolgt dabei auf eine Flachseite des Faserstranges das Aufbringen eines flüssigen Kunststoffilms aus der rechten Beschichtungsdüse direkt, während auf die zweite Flachseite das Aufbringen indirekt durch Einpressen des Faserstranges in den vorher aus der linken Beschichtungsdüse auf die Schneckenwelle aufgetragenen flüssigen Kunststoffilm erfolgt, dabei wird der Faserstrang innerhalb einer Einzugs- und Imprägnierstrecke m mit den einzelnen endlosen Fasern an den Extruderwellen einreibend bzw. durchreibend an beiden Flachseiten mit den flüssigen Kunststoffilmen benetzt bzw. getränkt und
c) anschließend werden die mit Kunststoff durchimprägnierte bzw. durchgetränkte Einzelfasern bzw. der Faserstrang aus der Einzugs- und Imprägnierstrecke m über eine Schneidkante in die im Durchmesser verkleinerten Schneckenzylinder in eine kurze Austrag- und Förderstrecke n geführt und hierbei in weitgehend vorbestimmte Längen zerschnitten.

In einer zweiten Lösung kommen folgende Verfahrensschritte zur Anwendung:
a) der Faserstrang wird über eine Beschichtungsdüse in die Zuführöffnung des Plastifizierextruders mit seiner Breite b parallel zu den Extruder-Achsen und annähernd tangential auf eine Extruderwelle und um die Extruderwellen vortreibend aufgewickelt sowie in Zylinderbohrungen von im Durchmesser um mindestens die vierfache Stärke S des Faserstranges vergrößerte Schneckenzylinder eingezogen,
b) in der Zuführöffnung erfolgt dabei auf eine Flachseite des Faserstranges das Aufbringen eines flüssigen Kunststoffilms aus einer rechts der Zuführöffnung angeordneten Beschichtungsdüse direkt oder es erfolgt auf die zweite Flachseite das Aufbringen des Kunststoffilms indirekt durch Einpressen des Faserstranges in den vorher aus einer an der Zuführöffnung angeordneten Beschichtungsdüse auf die Schneckenwelle wobei der Faserstrang innerhalb einer Einzugs- und Imprägnierstrecke m mit den einzelnen endlosen Fasern an den Oberflächen der Extruderwellen einreibend bzw. durchreibend an beiden Flachseiten mit dem flüssigen Kunststoffilm benetzt bzw. getränkt wird und
c) anschließend werden die mit Kunststoff durchimprägnierten bzw. durchgetränkten Einzelfasern bzw. der Faserstrang aus der Einzugs- und Imprägnierstrecke m über eine Schneidkante in die im Durchmesser verkleinerten Schneckenzylinder in eine kurze Austrag- und Förderstrecke geführt und hierbei in weitgehend vorbestimmte Längen zerschnitten.

Als Vorteil des erfindungsgemäßen Verfahrens ist insbesondere zur Erzeugung einer ausreichenden Einzugskraft das parallele und tangentiale zuführen der Faserbahn und das vortreibende, bei Bedarf mehrfache, Aufwickeln der Faserstrangbreite zu und auf die Schneckenwellen anzuführen. Weiter ist von Vorteil, daß bei der Beschichtung des Faserstranges in der Zuführöffnung und beim Durchzug durch die Einzugs- und Imprägnierstrecke m die Fasern schon vollständig mit dem flüssigen Kunststoff durch einreiben/einwalken getränkt, plastifiziert und im richtigen Mischungsverhältnis mit dem Kunststoff belegt werden. Erst danach wird der Faserstrang geschnitten. Für die beim Schneiden der durchtränkten Fasern bzw. Faserstränge an der Schneidkante am Eingang zur Austrag- und Förderstrecke teils entstehenden Faserbündel genügt eine kurze Austrag- und Förderstrecke um diese Faserbündel zu einem homogenen Produkt aufzulösen und den Produktstrang pulsationsfrei bei entsprechendem Füllgrad der Schnecken aus dem Plastifizierextruder herauszufördern. Durch das Fehlen von Misch- und Knetelementen in der Austrag- und Förderstrecke entsteht nahezu kein Feinanteil durch zerriebene Fasern.

Die Lösung der Aufgabe für den Plastifizierextruder besteht nach Anspruch 13 darin, daß die Plastifizierextruderlänge L in eine Einzugs- und Imprägnierstrecke m und eine Austrag- und Förderstrecke n eingeteilt ist, wobei das Gehäuse für die Einzugs- und Imprägnierstrecke m mit im Durchmesser D um mindestens die vierfache Stärke S des Faserstranges vergrößerten Zylinderbohrungen ausgebildet ist, eine oder zwei Beschichtungsdüsen über der Zuführöffnung angebracht sind wobei die Zuführöffnung in ihrer Längserstreckung vorzugsweise parallel zu den Achsen in etwa tangential über einer Extruderwelle vorgesehen ist und die Austrag- und Förderstrecke n am Eingang eine geformte oder gerade Schneidkante aufweist und ihre Zylinderbohrungen mit dem sonst bei Extrudern üblichen Durchmesser d bzw. eingeengtem Schneidspalt ausgeführt sind.

Durch das vorteilhafte vortreibende Aufwickeln des Faserstranges nach der Erfindung auf die gerundeten Elemente in der Einzugs- und Imprägnierstrecke sind große Zugkräfte auf den Faserstrang auszuüben, ohne daß die Einzelfasern zerschnitten, abgequetscht oder zerrissen werden. Damit der den Kunststoffilm bereits mitführende Faserstrang ohne nachteilig bremsendes Hindernis geführt angetrieben werden kann, sind die Gehäusebohrungen in diesem Bereich für die Extruderwellen im Durchmesser vergrößert ausgeführt. Wird der Faserstrang überlappend auf die abgerundeten Schneckenstege und den gerundeten Schneckengrund eingezogen, so ist dieser Durchmesser um mindestens die vierfache Faserstrangstärke größer auszubilden, damit die Einzelfasern nicht aus dem Faserstrang abgeschert werden und sich durch Vergrößerung des Umschlingungswinkels ein sicherer Faserstrangantrieb einstellt. Über die festgelegte Schlupfbewegung beim Fördern des Faserstranges über die Schneckenstege und den Schneckengrund sowie das Ziehen über die abgerundeten Achterbohrungsspitzen erfolgt ein optimales verteilen, einreiben und einmassieren der Kunststoffschmelze in, auf bzw. um die Einzelfasern.

Bei Plastifizierextrudern ist der Füllgrad der Schnecken im Plastifizierbereich für die Pulsation des Produktaustrages verantwortlich, das heißt, wenn die Schnecken pro Umdrehung zu gering mit Material, Glasfasern und Kunststoffschmelze, gefüllt sind, stellt sich an der Austrittsdüse eine ungleichmäßige Produktaustragsgeschwindigkeit (Pulsation) ein, welche sich in störenden Gewichtsschwankungen des auf Länge geschnittenen Produkts äußert.

Durch den gleichmäßigen Einzug des beschichteten Faserstranges und der Anpassung abhängig von dem Mischungsverhältnis von Kunststoffmenge zur Fasermenge über die Anzahl der Einzelfasern oder über ihr spezifisches Stranggewicht (Texgewicht) gemäß der Erfindung, kann die schädliche Pulsation verhindert werden. Dafür ist ein Füllgrad aus Fasern des Faserstranges und der Kunststoffschmelze in den Schnecken von 40% bis 80% notwendig um ein kontinuierliches und pulsationsfreies Fördern zu erreichen. Dies wird weiter durch die auf den Faserstrang ausübbare erhöhte Antriebskraft ermöglicht, weil der entstehende vortreibende Wickel auf den Extruderwellen und die abgerundete Ausbildung der Schnecken sowie der Achterbohrungsspitzen im Einzugs- und Imprägnierbereich die Einzelfasern bis zur Schneidkante unzerstört lassen. Um die Vortriebsgeschwindigkeit und den Überlappungsgrad besser beeinflussen zu können, wird der Faserstrang zweckmäßig in Förderrichtung schräg in die Zuführöffnung des Plastifizierextruders eingeführt.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: den Plastifizierextruder gemäß der Erfindung im Schnitt A-A nach Figur 2,
- Figur 2: in Seitenansicht den Plastifizierextruder nach der Erfindung und
- Figur 3: in Seitenansicht den Austrag des fertigen Produkts im Start-Stopp-Betrieb.

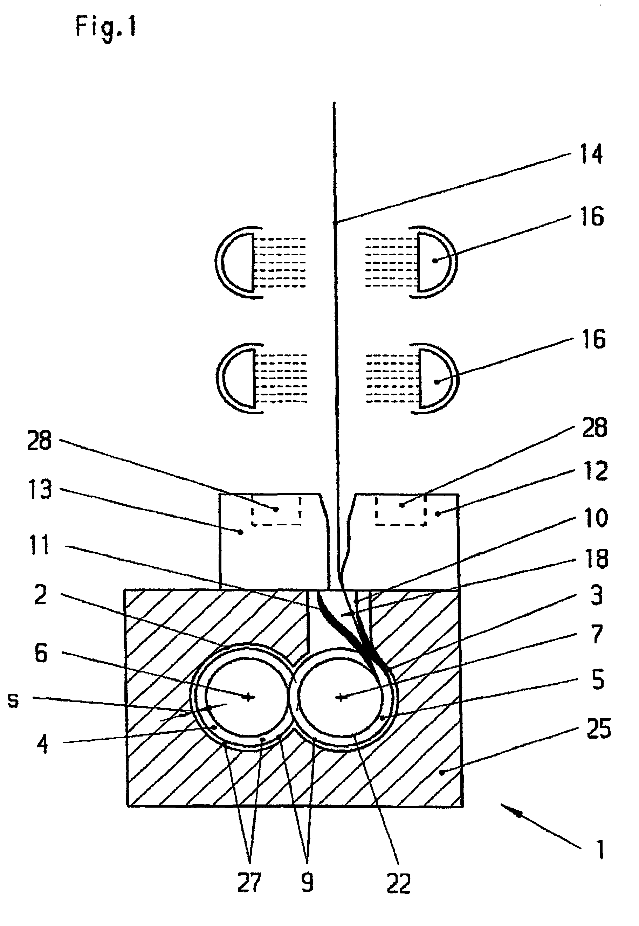

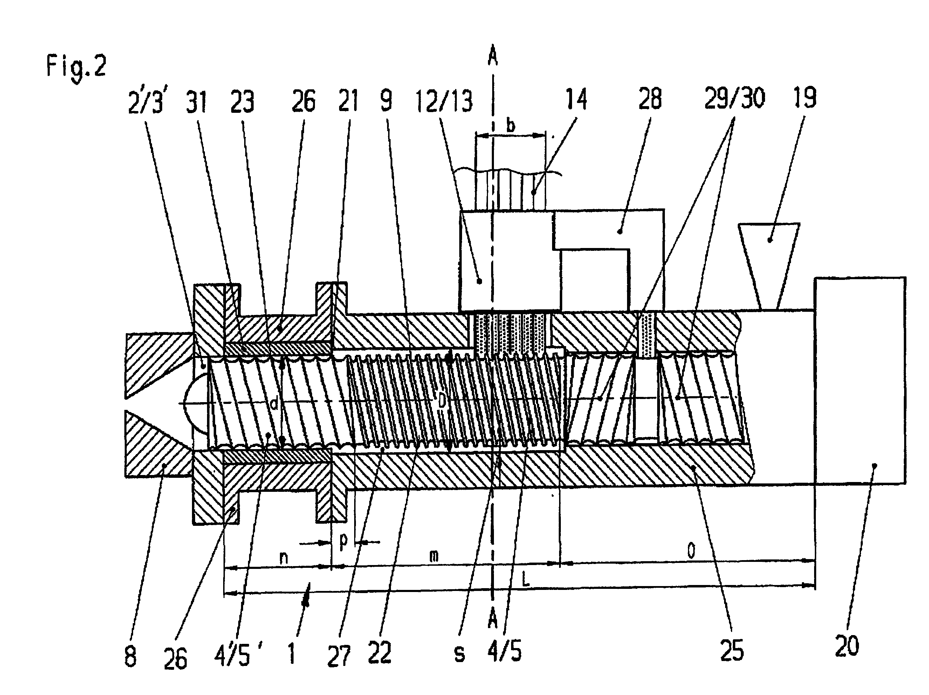

In den Figuren 1 und 2 ist der Plastifizierextruder 1 gemäß der Erfindung als Zwei-Wellen-Extruder mit der Länge L dargestellt. Wie die Figur 2 zeigt, ist die Länge des Plastifizierextruders 1 in drei Funktionsbereiche eingeteilt und dafür entsprechend ausgebildet, nämlich in einen Vorplastifizierbereich o, zum Aufbereiten und Aufschmelzen des Kunststoffes, einer Einzug- und Imprägnierstrecke m und einer Austrag- und Förderstrecke n. Für den formenden Austrag des fertigen Produktes 33 (=faserverstärkte Kunststoffmasse) ist am Ende eine Austrittsdüse 8 angebracht. Die Figur 1 zeigt im Schnitt A-A aus Figur 2 den Einzug des Faserstrangs 14 über die links und rechts der Zuführöffnung 18 angeordnete Beschichtungsdüsen 12 und 13. Vor den Beschichtungsdüsen 12 und 13 sind beidseitig des Faserstranges 14 in seiner Breite b je eine Strahlungsheizeinrichtung 16 vorgesehen. Der Plastifizierextruder 1 besteht weiter aus dem Gehäuse 25 mit den Bohrungen 2 und 3 sowie den Achsen 6 und 7 für die Extruderwellen 4 und 5 der Einzug- und Imprägnierstrecke m, dem Gehäuse 26 mit den Bohrungen 2' und 3' für die Extruderwellen 4' und 5' der Austrag- und Förderstrecke n und den Extruderwellen 29 und 30 des Vorplastifizierbereichs o. Für die Aufbereitung des Kunststoffs ist am Gehäuse 25 für die Kunststoffgranulatzuführung ein Einfülltrichter 19 angebracht. Die Kunststoffzuführung 28 befördert den aufbereiteten Kunststoff zu den Beschichtungsdüsen 12 und 13. Für den Antrieb der Extruderwellen 29/30, 4/5 und 4'/5' dient der Antrieb 20. Im Fertigungsbetrieb wird der Faserstrang 14 bei der Förderbewegung in den Einzugskanal 27 und von hier in Richtung Produktaustrag mit den Schneckenelementen des Extruders über die gerundeten Schneckenstegen 9 und den gerundeten Schneckengrund 22 gezogen. Dabei bewegen sich die Faserstränge des Faserstranges 14 noch auf den Schneckenstegen 9 vom Außendurchmesser und dem Kerndurchmesser auf und ab und werden beim gleichsinnig drehenden Doppelschneckenextruder jeweils von der einen Schneckenwelle zur anderen Schneckenwelle übergeben. Das heißt der Faserstrang 14 wird in einer Art Achterbahnumlauf, je nach Faserbahnbreite b, mehr oder weniger überlappend in Richtung Zerteilbereich der Fasern gefördert. Bei diesen Transportgleitbewegungen wird der mit den Fasern mitgeführte flüssige Kunststoff (Kunststoffilm) 10 und 11 in die Fasern hineingerieben, damit dann alle Faserfilamente mit Kunststoff getränkt/beschichtet werden. Die Länge dieser Einzugs- und Imprägnierstrecke m für alle unzerteilten Endlosfasem wird bestimmt von den Zugkräften, welche auf den Faserstrang 14 ausgeübt werden müssen, damit dieser sicher ohne störende Geschwindigkeitsänderungen angetrieben wird.
Der Faserstrang wird über am Gehäuse 25 angebrachte oder im Abstand dazu angeordnete Beschichtungsdüsen 12 und 13 in die Zuführöffnung 18 des Plastifizierextruders 1 mit seiner Breite b parallel zu den Extruderachsen 6 und 7 und annähernd tangential auf eine Extruderwelle und um die Extruderwellen 4 und 5 mehrfach vortreibend und überlappend aufgewickelt sowie in Zylinderbohrungen von im Durchmesser D um mindestens die doppelte Stärke S des Faserstranges 14 vergrößerte Schneckenzylinder eingezogen. In der Zuführöffnung 18 erfolgt dabei auf eine Flachseite des Faserstranges 14 das Aufbringen eines flüssigen Kunststoffilms 10 aus der rechten Beschichtungsdüse 12 direkt, während auf die zweite Flachseite das Aufbringen indirekt durch Einpressen des Faserstranges 14 in den vorher aus der linken Beschichtungsdüse 13 auf die Extruderwelle 5 aufgetragenen flüssigen Kunststoffilm 11 erfolgt, dabei wird der Faserstrang 14 innerhalb der Einzugs- und Imprägnierstrecke m mit den einzelnen endlosen Fasern an den Extruderwellen 4 und 5 einreibend an beiden Flachseiten mit den flüssigen Kunststoffilmen 10 und 11 benetzt bzw. getränkt. Anschließend werden die mit den Kunststoffilmen 10 und 11 durchimprägnierte bzw. durchgetränkte Einzelfasern des Faserstrangs 14 aus der Einzugs- und Imprägnierstrecke m über die Schneidkante 21 in die im Durchmesser d verkleinerten Schneidbohrungen mit den Schneckenstegen 23 in die Austrag- und Förderstrecke n geführt und hier in weitgehende vorbestimmte Längen zerschnitten. Bei einfach zu tränkenden Fasersträngen und angepaßter Konsistenz der Kunststoffschmelze kann es gemäß einem zweiten Ausführungsbeispiels genügen, den Faserstrang 14 nur von einer Flachseite mit Kunststoff zu beschichten.

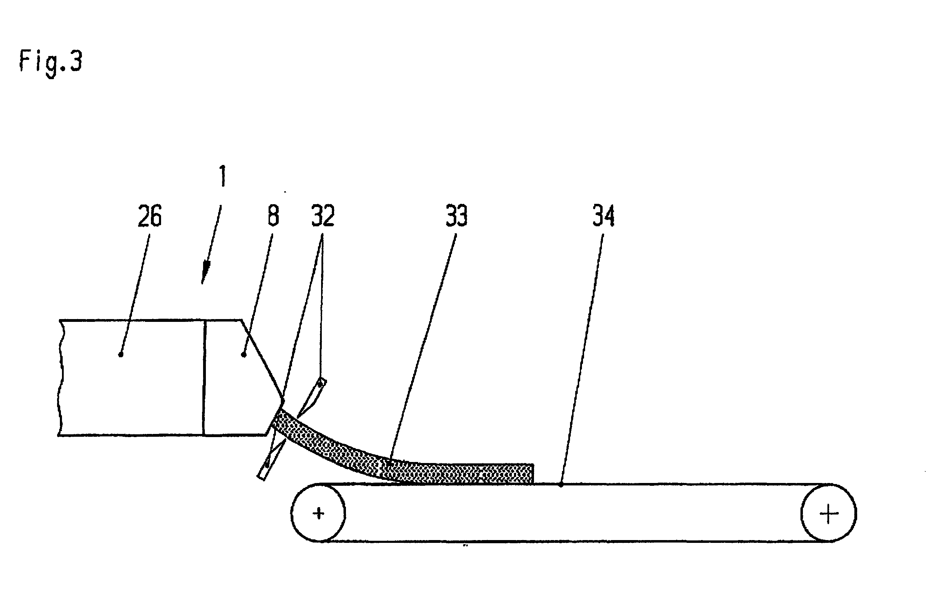

Wie Figur 3 zeigt kann es für einen bestimmten Mengen- und Maschinentakt sowie produzierenden Herstellungszyklus von Vorteil sein, daß der Plastifizierextruder 1 für ein diskontinuierlich erforderliches Produkt 33 der Fließpreßverarbeitung im Start-Stopp-Betrieb arbeitet. Das heißt der Plastifizierextruder 1 fördert das erforderliche Produkt 33 aus der Austrittdüse 8 auf ein Förderband 34 und stoppt für das Abschneiden des Produktstranges. Nachdem das abgeschnittene Produkt 33 abtransportiert wurde, startet der Plastifizierextruder 1 bei geöffneter Schneidvorrichtung 32 in Abhängigkeit des Preßzyklusses für das Austragen des nächsten Produkts 33. Diese Arbeitsweise wird möglich, weil die Faserstränge 4 ohne störenden Schlupf angetrieben werden können.

Weitere zweckmäßige Ausgestaltungen des Plastifizierextruders 1 bestehen darin,
- daß die Schneidkante 21 an einer auswechselbaren und nachschärfbaren Verschleißbuchse 31 angebracht ist,
- daß die Schneckenwellen 2' und 3' der Austrag- und Förderstrecke n mit einer oder mehreren Schneckenstegen 23 um einen Einzugsbereich p in die Einzugs- und Imprägnierstrecke m zurückreichend ausgeführt sind,
- anstelle eines Vorplastifizierbereichs o ein separater Hilfsplastifizierextruder (nicht dargestellt) für die Beschickung der Beschichtungsdüsen 12 und 13 mit aufbereitetem Kunststoff vorgesehen ist.

Die Idee des separaten Hilfsplastifizierextruders ist mit dem Vorteil verbunden, daß bei einer unabhängigen Drehzahlnutzung für das Aufschmelzen des Kunststoffes bzw. das direkte Aufbereiten aus Polymer und Additiven zur Kunststoffschmelze für die Faserbeschichtung möglich ist.

Für bestimmte Anwendungen des Plastifizierextruder 1 kann es zweckmäßig sein, daß ein oder beidseitig die flüssigen Kunststoffilme 10 und/oder beim Eintritt des Faserstrangs 14 in die Zuführöffnung 18 des Plastifizierextruder 1 mit heißem Gas, zum Beispiel mit Luft und/oder Stickstoff angeblasen werden.

### Bezugszeichenliste

- 1.: Plastifizierextruder
- 2.: Gehäusebohrung (Imprägnierteil)
- 3.: Gehäusebohrung (Imprägnierteil)
- 4.: Extruderwelle (lmprägnierteil)
- 5.: Extruderwelle (Imprägnierteil)
- 6.: Extruderachse
- 7.: Extruderachse
- 8.: Austrittsdüse
- 9.: abgerundeter Schneckensteg
- 10.: flüssiger Kunststoffilm
- 11.: flüssiger Kunststoffilm
- 12.: Beschichtungsdüse
- 13.: Beschichtungsdüse
- 14.: Faserbündelstrang, Faserstrang
- 15.: Führungsgatter 1
- 16.: Strahlungsheizeinrichtung
- 17.: Führungsgatter 2
- 18.: Zuführöffnung
- 19.: Einfülltrichter
- 20.: Antrieb
- 21.: Schneidkante
- 22.: Schneckengrund
- 23.: Schneckensteg (scharf)
- 24.: Produkt
- 25.: Gehäuse für m
- 26.: Gehäuse für n
- 27.: Einzugskanal
- 28.: Kunststoffzuführung zu 12/13
- 29.: Extruderwellen im Vorplastifizierbereich
- 30.: Extruderwellen im Vorplastifizierbereich
- 31.: Verschleißbuchse
- 32.: Schneidvorrichtung
- 33.: Produkt
- 34.: Förderband

- b: Strangbreite
- D: ⌀ Wickelbohrung
- d: ⌀ Schneidbohrung
- m: Einzugs- und Imprägnierstrecke
- n: Austrag- und Förderstrecke
- L: Plastifizierextruderlänge
- S: Stärke des Faserstranges
- O: Vorplastifizierbereich
- P: Einzugsbereich für n

## Patentansprüche

1. Verfahren zur Herstellung von faserverstärkten Kunststoffmassen unter Verwendung eines Plastifizierextruders, bei dem ein Faserstrang über Führungsgatter und Vorwärmeinrichtung geführt in einer Imprägniervorrichtung mit flüssigem Kunststoffilm benetzt wird und anschließend in den Plastifizierextruder eingeführt, darin die einzelnen Fasern zerschnitten und vermischt und als weiterverarbeitbare faserverstärkte Kunststoffmasse ausgetragen werden,
**gekennzeichnet durch** folgende Verfahrensschritte:
a) der Faserstrang wird über Beschichtungsdüsen in die Zuführöffnung des Plastifizierextruders mit seiner Breite b vorzugsweise parallel zu den Extruderachsen und annähernd tangential auf eine Extruderwelle und um die Extruderwellen vortreibend aufgewickelt sowie in Zylinderbohrungen von im Durchmesser um mindestens die vierfache Stärke S des Faserstranges vergrößerte Schneckenzylinder eingezogen,
b) in der Zuführöffnung erfolgt dabei auf eine Flachseite des Faserstranges das Aufbringen eines flüssigen Kunststoffilms aus der rechten Beschichtungsdüse direkt, während auf die zweite Flachseite das Aufbringen indirekt **durch** Einpressen des Faserstranges in den vorher aus der linken Beschichtungsdüse auf die Schneckenwelle aufgetragenen flüssigen Kunststoffilm erfolgt, dabei wird der Faserstrang innerhalb einer Einzugs- und Imprägnierstrecke m mit den einzelnen endlosen Fasern an den Extruderwellen einreibend bzw. durchreibend an beiden Flachseiten mit den flüssigen Kunststoffilmen benetzt bzw. getränkt und
c) anschließend werden die mit Kunststoff durchimprägnierten bzw. durchgetränkten Einzelfasern bzw. der Faserstrang aus der Einzugs- und Imprägnierstrecke m über eine Schneidkante in die im Durchmesser verkleinerten Schneckenzylinder in eine kurze Austrag- und Förderstrecke n geführt und hierbei in weitgehend vorbestimmte Längen zerschnitten.

2. Verfahren zur Herstellung von faserverstärkten Kunststoffmassen unter Verwendung eines Plastifizierextruders, bei dem ein Faserstrang über Führungsgatter und Vorwärmeinrichtung geführt in einer Imprägniervorrichtung mit flüssigem Kunststoffilm benetzt wird und anschließend in den Plastifizierextruder eingeführt, darin die einzelnen Fasern zerschnitten und vermischt und als weiterverarbeitbare faserverstärkte Kunststoffmasse ausgetragen wird,
insbesondere nach Anspruch 1, **gekennzeichnet durch** folgende Verfahrensschritte:
a) der Faserstrang wird über eine Beschichtungsdüse in die Zuführöffnung des Plastifizierextruders mit seiner Breite b vorzugsweise parallel zu den Extruderachsen und annähernd tangential auf eine Extruderwelle und um die Extruderwellen vortreibend aufgewickelt sowie in Zylinderbohrungen von im Durchmesser um mindestens die doppelte Stärke S des Faserstranges vergrößerte Schneckenzylinder eingezogen,
b) in der Zuführöffnung erfolgt dabei auf eine Flachseite des Faserstranges das Aufbringen eines flüssigen Kunststoffilms aus einer rechts der Zuführöffnung angeordneten Beschichtungsdüse direkt oder es erfolgt auf die zweite Flachseite das Aufbringen des Kunststoffilms indirekt **durch** Einpressen des Faserstranges in den vorher aus einer an der Zuführöffnung angeordneten Beschichtungsdüse auf die Schneckenwelle aufgetragenen flüssigen Kunststoffilm, wobei der Faserstrang innerhalb einer Einzugs- und Imprägnierstrecke m mit den einzelnen endlosen Fasern an den Oberflächen der Extruderwellen einreibend bzw. durchreibend an beiden Flachseiten mit dem flüssigen Kunststoffilm benetzt bzw. getränkt wird und
c) anschließend wird der mit Kunststoff durchimprägnierte bzw. durchgetränkte Faserstrang aus der Einzugs- und Imprägnierstrecke m über eine Schneidkante in die im Durchmesser verkleinerten Schneckenzylinder in eine kurze Austrag- und Förderstrecke n geführt und hierbei in weitgehend vorbestimmte Längen zerschnitten.

3. Verfahren nach einem der Ansprüche 1 oder 2, **dadurch gekennzeichnet, daß** der Faserstrang mehrfach auf die Extruderwellen innerhalb der Einzugs- und Imprägnierstrecke (m) vortreibend aufgewickelt wird.

4. Verfahren nach einem oder mehreren der Ansprüche 1 bis 3, **dadurch gekennzeichnet, daß** die Faserbahnbreite (b) des Faserstranges überlappend aufgewickelt wird.

5. Verfahren nach einem oder mehreren der Ansprüche 1 bis 4, **dadurch gekennzeichnet, daß** der Faserstrang in Förderrichtung schräg in die Zuführöffnung des Plastifizierextruders eingeführt wird.

6. Verfahren nach einem oder mehreren der Ansprüche 1 bis 5, **dadurch gekennzeichnet, daß** die Anpassung des Schneckenfüllgrades von 40% bis 80% in der Austrag- und Förderstrecke (n) in Abhängigkeit des Mischungsverhältnisses von Kunststoffmenge zur Fasermenge, über die Anzahl der endlosen Faserstränge und/oder ihr spezifisches Faserstranggewicht (Texgewicht) erfolgt.

7. Verfahren nach einem oder mehreren der Ansprüche 1 bis 6, **dadurch gekennzeichnet, daß** die Länge der zerschnittenen Einzelfasern bei gerader Schneidkante über den Schneckenwellendurchmesser und/oder der Schneckensteigung und/oder der Schneckengangzahl beeinflußbar ist.

8. Verfahren nach einem oder mehreren der Ansprüche 1 bis 7, **dadurch gekennzeichnet, daß** ein- oder beidseitig die flüssigen Kunststoffilme vor oder beim Eintritt des Faserstranges in die Zuführöffnung des Plastifizierextruders mit heißem Gas, z. B. Luft oder Stickstoff, an die Faserbahn mittels einer Blaseinrichtung angeblasen werden.

9. Verfahren nach einem oder mehreren der Ansprüche 1 bis 8, **dadurch gekennzeichnet, daß** der aufzutragende Kunststoffilm in seiner Breite mit den Beschichtungsdüsen bzw. der Blaseinrichtung der Breite des Faserstranges anpaßbar ist.

10. Verfahren nach Anspruch 1, **dadurch gekennzeichnet, daß** der Plastifizierextruder für einen diskontinuierlichen Kunststoffmassen-Austrag im Start-und-Stopp Betrieb arbeitet.

11. Verfahren nach einem oder mehreren der Ansprüche 1 und 10, **dadurch gekennzeichnet, daß** der Plastifizierextruder die fertige Kunststoffmasse bzw. das fertige Produkt auf ein Förderband auflegt, nach einer vorgegebenen Austragsmenge stoppt, abschneidet und wegtransportiert sowie anschließend einen neuen Austragsmengenzyklus startet.

12. Plastifizierextruder zur Herstellung von faserverstärkten Kunststoffmassen, umfassend eine einen Faserstrang beheizende Strahlungsheizeinrichtung in der Transportlinie zum Plastifizierextruder, eine Imprägniervorrichtung im Plastifizierextruder und zum Einführen des Faserstranges, Zerschneiden und Mischen einen Plastifizierextruder bestehend aus einem Gehäuse mit zwei Bohrungen und Achsen zweier drehangetriebener Extruderwellen, wobei im Gehäuse eine Zuführöffnung zum Einführen eines Faserstranges in die Bohrungen vorgesehen ist, zur Durchführung des Verfahrens nach Anspruch 1 oder 2, **dadurch gekennzeichnet, daß** die Plastifizierextruderlänge (L) in eine Einzugs- und Imprägnierstrecke (m) und eine Austrag- und Förderstrecke (n) eingeteilt ist, wobei das Gehäuse (25) für die Einzugs- und Imprägnierstrecke (m) mit im Durchmesser (D) um mindestens die vierfache Stärke (S) des Faserstranges (14) vergrößerten Zylinderbohrungen (2 und 3) ausgebildet ist, eine oder zwei Beschichtungsdüsen (12 und 13) über der Zuführöffnung (18) angebracht sind wobei die Zuführöffnung (18) in ihrer Längserstreckung vorzugsweise parallel zu den Achsen (6 und 7) in etwa tangential über einer Extruderwelle (5) vorgesehen ist und die Austrag- und Förderstrecke (n) am Eingang eine Schneidkante (21) aufweist und ihre Zylinderbohrungen (2' und 3')mit dem sonst üblichen Durchmesser (d) ausgeführt sind.

13. Plastifizierextruder nach Anspruch 12, **dadurch gekennzeichnet, daß** ein separater Hilfsplastifizierextruder vorgesehen ist, in dem der Beschichtungskunststoff aufbereitet und über Kanäle/Rohre den Beschichtungsdüsen (12/13) zuführbar ist.

14. Plastifizierextruder nach den Ansprüchen 12 und 13, **dadurch gekennzeichnet, daß** die Extruderwellen (4 und 5) der Einzugs- und Imprägnierstrecke (m) mit abgerundeten Schneckenstegen (9) ausgeführt sind, während die Schneckenstege (23) der Austrag- und Förderstrecke (n) vorzugsweise scharf ausgebildet sind.

15. Plastifizierextruder nach den Ansprüchen 12 bis 14, **dadurch gekennzeichnet, daß** die Schneidkante (21) an einer auswechselbaren Verschleißbuchse (26) angebracht ist.

16. Plastifizierextruder nach einem oder mehreren der Ansprüche 12 bis 15, **dadurch gekennzeichnet, daß** der Plastifizierextruder (1) einen Vorplastifizierbereich (o) zum Aufbereiten des Beschichtungskunststoffes aufweist, dessen Ausgang über einen Zuführungskanal (28) mit einer oder zwei Beschichtungsdüsen (12/13) verbunden ist.

17. Plastifizierextruder nach einem oder mehreren der Ansprüche 12 bis 16, **dadurch gekennzeichnet, daß** die Schneckenwellen (2' und 3') der Austrag- und Förderstrecke (n) mit einem oder mehreren Schneckenstegen (23) um einen Einzugsbereich (p) in die Einzugs- und Imprägnierstrecke (m) zurückreichend ausgeführt sind.

18. Plastifizierextruder nach einem oder mehreren der Ansprüche 12 bis 17, **dadurch gekennzeichnet, daß** anstelle eines Vorplastifizierbereichs (o) ein separater Hilfsplastifizierextruder für die Beschickung der Beschichtungsdüsen (12/13) vorgesehen ist

19. Plastifizierextruder nach einem oder mehreren der Ansprüche 12 bis 18, **dadurch gekennzeichnet, daß** die Faserlänge im fertigen Produkt durch die Form von Schneidtaschen in Förderrichtung der Schneidkante (21) beeinflußbar ist.

20. Plastifizierextruder nach einem oder mehreren der Ansprüche 12 bis 19, **dadurch gekennzeichnet, daß** der Plastifizierextruder (1) oder der Hilfsplastifizierextruder zusammen mit dem Plastifizierextruder (1) für einen diskontinuierlichen Betrieb mit einer Steuerung für einen Start-und-Stopp-Betrieb ausgeführt ist.

21. Plastifizierextruder nach einem oder mehreren der Ansprüche 12 bis 20, **dadurch gekennzeichnet, daß** en der Austrütsdüse (8)eine Schneidvorrichtung (32) zum Zerteilen des faserverstärkten Kunststoffmassenstranges (33) bzw. des austretenden Produkts (33) vorgesehen ist.

22. Plastifizierextruder nach einem oder mehreren der Ansprüche 12 bis 21, **dadurch gekennzeichnet, daß** das fertige, zerteilte Produkt (33) durch ein in Start- und-Stopp-Betrieb gesteuertes Förderband (34) weiterbeförderbar ist.

## Claims

1. A method for producing fiber-reinforced plastic masses using a plasticizing extruder, in which a fiber skein, guided via a guide gate and a preheating device, is wetted in an impregnating device using liquid plastic film and subsequently introduced into the plasticizing extruder, in which the individual fibers are chopped and mixed and deliveryd as a fiber-reinforced plastic mass which may be processed further,
**characterized by** the following method steps:
a) the fiber skein is, via coating nozzles in the feed opening of the plasticizing extruder, with its width b preferably parallel to the extruder axis and approximately tangential to an extruder shaft, wound around the extruder shaft while being driven forward as well as being drawn into cylinder bores of screw cylinders, which are enlarged by at least four times the diameter of thickness S of the fiber skein,
b) at the same time, a liquid plastic film is applied directly onto a flat side of the fiber skein from the right coating nozzle, while the application is performed indirectly on the second flat side by pressing the fiber skein into the liquid plastic film previously applied to the screw shaft from the left coating nozzle, and, at the same time, the fiber skein is wetted and/or impregnated with the liquid plastic films by rubbing them into or through the individual endless fibers on the extruder shaft on both flat sides within a drawing-in and impregnation section m, and
c) subsequently, the individual fibers, which are impregnated with plastic, and/or the fiber skein are guided out of the drawing-in and impregnation section m via a cutting edge in the screw cylinder, whose diameter is reduced, into a short delivery and conveyor section and chopped into largely pre-determined lengths at the same time.

2. A method for producing fiber-reinforced plastic masses using a plasticizing extruder, in which a fiber skein, guided via a guide gate and a preheating device, is wetted in an impregnating device using liquid plastic film and subsequently introduced into the plasticizing extruder, in which the individual fibers are chopped and mixed and deliveryd as a fiber-reinforced plastic mass which may be processed further, particularly according to Claim 1,
**characterized by** the following method steps:
a) the fiber skein is, via coating nozzles in the feed opening of the plasticizing extruder, with its width b preferably parallel to the extruder axis and approximately tangential to an extruder shaft, wound around the extruder shaft while being driven forward as well as being drawn into cylinder bores of screw cylinders, which are enlarged by at least two times the diameter of thickness S of the fiber skein,
b) at the same time, a liquid plastic film is directly applied onto a flat side of the fiber skein from the right coating nozzle, while the application is performed indirectly on the second flat side by pressing the fiber skein into the liquid plastic film previously applied to the screw shaft from the left coating nozzle, and, at the same time, the fiber skein is wetted and/or impregnated with the liquid plastic films by rubbing them into or through the individual endless fibers on the extruder shaft on both flat sides within a drawing-in and impregnation section m, and
c) subsequently, the individual fibers, which are impregnated with plastic, and/or the fiber skein are guided out of the drawing-in and impregnation section m via a cutting edge in the screw cylinder, whose diameter is reduced, into a short delivery and conveyor section and chopped into largely pre-determined lengths at the same time.

3. The method according to one of Claims 1 or 2,
**characterized in that** the fiber skein is wound onto the extruder shaft multiple times inside the drawing-in and impregnation section (m) to drive it forward.

4. The method according to one or more of Claims 1 to 3,
**characterized in that** the fiber web width (b) of the fiber skein is wound up overlapping.

5. The method according to one or more of Claims 1 to 4,
**characterized in that** the fiber skein is introduced into the feed opening of the plasticizing extruder slanted in the conveyance direction.

6. The method according to one or more of Claims 1 to 5,
**characterized in that** the adjustment of the degree of screw filling from 40% to 80% in the delivery and conveyor section (n) is performed as a function of the mixing ratio of the quantity of plastic to the quantity of fiber, via the number of endless fiber skeins and/or their specific fiber skein weight (tex weight).

7. The method according to one or more of Claims 1 to 6,
**characterized in that**, for a straight cutting edge, the length of the chopped individual fibers may be influenced via the screw shaft diameter and/or the screw pitch and/or the number of threads per unit length of the screw.

8. The method according to one or more of Claims 1 to 7,
**characterized in that** the liquid plastic films are blown onto the fiber web on one or both sides using a blowing device using hot gas, e.g., air or nitrogen, before or after the entrance of the fiber skein into the feed opening of the plasticizing extruder.

9. The method according to one or more of Claims 1 to 8,
**characterized in that** the width of the plastic film to be applied is adjustable to the width of the fiber skein using the coating nozzles and/or the blowing device.

10. The method according to Claim 1,
**characterized in that** the plasticizing extruder operates in start and stop operation for discontinuous plastic mass delivery.

11. The method according to one or more of Claims 1 and 10,
**characterized in that** the plasticizing extruder delivers the finished plastic mass and/or the finished product onto a conveyor belt, and, after a pre-determined delivery amount, stops, cuts it off, transports it away, and subsequently starts a new delivery amount cycle.

12. A plasticizing extruder for producing fiber-reinforced plastic masses, including a radiant heater, which heats a fiber skein, in the transport line to the plasticizing extruder, an impregnating device in the plasticizing extruder, and, for introducing the fiber skein, chopping, and mixing, a plasticizing extruder comprising a housing having two bores and axles of two rotationally driven extruder shafts, a feed opening being provided in the housing for introducing a fiber skein into the bores, for performing the method according to Claim 1 or 2, **characterized in that** the length of the plasticizing extruder (L) is partitioned into a drawing-in and impregnating section (m) and a delivery and conveyor section (n), the housing (25) for the drawing-in an impregnating section (m) being implemented having cylinder bores (2 and 3) with diameters (D) enlarged by at least four times the thickness (S) of the fiber skein (14), one or two coating nozzles (12 and 13) attached over the feed opening (18), the feed opening (18) preferably being provided parallel in its lengthwise extension to the axles (6 and 7) and essentially tangential over an extruder shaft (5) and the delivery and conveyor section (n) having a cutting edge (21) at the entrance and its cylinder bores (2' and 3') being implemented using the otherwise typical diameter (d).

13. The plasticizing extruder according to Claim 12,
**characterized in that** a separate auxiliary plasticizing extruder is provided in which the coating plastic is prepared and is suppliable via channels/pipes to the coating nozzles (12/13).

14. The plasticizing extruder according to Claims 12 and 13,
**characterized in that** the extruder shafts (4 and 5) of the drawing-in and impregnating section (m) are implemented using rounded screw lands (9), while the screw lands (23) of the delivery and conveyor section (n) are preferably implemented as sharp.

15. The plasticizing extruder according to Claims 12 to 14,
**characterized in that** the cutting edge (21) is attached to a replaceable wear bushing (26).

16. The plasticizing extruder according to one or more of Claims 12 to 15,
**characterized in that** the plasticizing extruder (1) has a pre-plasticizing region (o), for preparing the coating plastic, whose outlet is connected to one or two coating nozzles (12/13) via a feed channel (28).

17. The plasticizing extruder according to one or more of Claims 12 to 16,
**characterized in that** the screw shafts (2' and 3') of the delivery and conveyor section (n) are implemented so they return using one or more screw lands (23) around a drawing-in region (p) into the drawing-in and impregnating section (m).

18. The plasticizing extruder according to one or more of Claims 12 to 17,
**characterized in that**, instead of a pre-plasticizing region (o), a separate auxiliary plasticizing extruder is provided for supplying the coating nozzles (12/13).

19. The plasticizing extruder according to one or more of Claims 12 to 18,
**characterized in that** the fiber length in the finished product may be influenced by the shape of cutting pockets in the conveyor direction of the cutting edge (21).

20. The plasticizing extruder according to one or more of Claims 12 to 19,
**characterized in that** the plasticizing extruder (1), or the auxiliary plasticizing extruder together with the plasticizing extruder (1), is implemented for discontinuous operation using a control for start and stop operation.

21. The plasticizing extruder according to one or more of Claims 12 to 20,
**characterized in that** a cutting device (32) is provided on the outlet nozzle (8) for dividing the fiber-reinforced plastic mass skein (33) and/or the product (33) coming out.

22. The plasticizing extruder according to one or more of Claims 12 to 21,
**characterized in that** the finished, divided product (33) may be conveyed further by a conveyor belt (34) which is controlled in start and stop operation.

## Revendications

1. Procédé de fabrication de masses plastiques chargées de fibres utilisant une extrudeuse de plastification au cours duquel un jonc de fibres passe par une grille de guidage et une unité de préchauffage avant d'être enrobé d'un film de plastique liquide dans un dispositif d'imprégnation et d'être ensuite introduit dans l'extrudeuse de plastification dans laquelle les différentes fibres sont coupées et mélangées, puis évacuées sous forme de masse plastique chargée de fibres destinée à un traitement ultérieur,
**caractérisé par** les étapes suivantes :
a) le jonc de fibres entre par des filières de revêtement dans l'ouverture d'entrée de l'extrudeuse de plastification, est enroulé par propulsion autour des arbres de l'extrudeuse, sa largeur b étant de préférence parallèle aux axes de l'extrudeuse et approximativement tangentielle par rapport à l'arbre de l'extrudeuse, et est également introduit dans des alésages cylindriques du cylindre de la vis dont le diamètre est augmenté d'au moins quatre fois l'épaisseur S du jonc de fibres,
b) dans l'ouverture d'entrée, un film de plastique liquide provenant de la filière de revêtement droite est appliqué directement sur une face plate du jonc de fibres, alors que l'application sur la deuxième face plate se fait indirectement en injectant le jonc de fibres dans le film de plastique liquide provenant de la filière de revêtement gauche et préalablement appliqué sur l'arbre de la vis, le jonc de fibres étant enrobé ou imbibé des films de plastique liquide dans une ligne d'alimentation et d'imprégnation m, les différentes fibres continues étant frottées dans ou contre les deux faces plates, et
c) les différentes fibres ou le jonc de fibres imprégné ou imbibé de part en part passe ensuite, d'une ligne d'alimentation et d'imprégnation m, à une ligne de sortie et de transport n courte en passant, par une arête coupante, dans les cylindres de vis dont le diamètre a été réduit, où elles sont tronçonnées en portions de longueur en grande partie prédéterminée.

2. Procédé de fabrication de masses plastiques chargées de fibres utilisant une extrudeuse de plastification au cours duquel un jonc de fibres passe par une grille de guidage et une unité de préchauffage avant d'être enrobé d'un film de plastique liquide dans un dispositif d'imprégnation et d'être introduit dans l'extrudeuse de plastification dans laquelle les différentes fibres sont coupées et mélangées, puis évacuées sous forme de masse plastique chargée de fibres destinée à un traitement ultérieur
notamment selon la revendication 1, **caractérisé par** les étapes suivantes :
a) le jonc de fibres entre par une filière de revêtement dans l'ouverture d'entrée de l'extrudeuse de plastification, est enroulé par propulsion autour des arbres de l'extrudeuse, sa largeur b étant de préférence parallèle aux axes de l'extrudeuse et approximativement tangentielle par rapport à l'arbre de l'extrudeuse et est également introduit dans les alésages cylindriques du cylindre de la vis dont le diamètre est augmenté d'au moins le double de l'épaisseur S du jonc de fibres,
b) dans l'ouverture d'entrée, un film de plastique liquide provenant d'une filière de revêtement disposée à droite de l'ouverture d'entrée est appliqué directement sur une face plate du jonc de fibres, ou alors le film de plastique liquide est appliqué indirectement sur la deuxième face plate en injectant le jonc de fibres dans le film de plastique liquide provenant d'une filière de revêtement disposée à gauche de l'ouverture et préalablement appliqué sur l'arbre de la vis, le jonc de fibres étant enrobé ou imbibé des films de plastique liquide dans une ligne d'alimentation et d'imprégnation m, les différentes fibres continues étant frottées dans ou contre les deux faces plates, et
c) le jonc de fibres imprégné ou imbibé de part en part passe ensuite, d'une ligne d'alimentation et d'imprégnation m, à une ligne de sortie et de transport n courte en passant, par une arête coupante, dans les cylindres de vis dont le diamètre a été réduit, où elles sont tronçonnées en portions de longueur en grande partie prédéterminée.

3. Procédé selon l'une des revendications 1 ou 2, **caractérisé en ce que**, dans la ligne d'alimentation et d'imprégnation (m), le jonc de fibres est plusieurs fois enroulé par propulsion sur les arbres de l'extrudeuse.

4. Procédé selon une ou plusieurs des revendications 1 à 3, **caractérisé en ce que** les largeurs de bandes (b) du jonc de fibres sont enroulées de manière à se chevaucher.

5. Procédé selon une ou plusieurs des revendications 1 à 4, **caractérisé en ce que** le jonc de fibres est introduit de biais, vu dans la direction de transport, dans l'ouverture d'entrée de l'extrudeuse de plastification.

6. Procédé selon une ou plusieurs des revendications 1 à 5, **caractérisé en ce que** le degré de remplissage de la vis de 40% à 80% dans la ligne de sortie et de transport (n) est ajusté en fonction du rapport de mélange quantité de plastique / quantité de fibres par le nombre de joncs de fibres continues et/ou leur poids spécifique (poids en tex).

7. Procédé selon une ou plusieurs des revendications 1 à 6, **caractérisé en ce que**, en cas d'arête tranchante droite, il est possible d'influencer la longueur des différentes fibres tronçonnées en variant le diamètre de l'arbre de vis et/ou l'inclinaison de la vis et/ou le nombre de pas de la vis.

8. Procédé selon une ou plusieurs des revendications 1 à 7, **caractérisé en ce que**, avant ou lors de l'entrée du jonc de fibres dans l'ouverture d'entrée de l'extrudeuse de plastification, les films de plastique liquide sont soufflés sur un ou sur les deux côtés contre la bande de fibre au moyen d'une unité de soufflage.

9. Procédé selon une ou plusieurs des revendications 1 à 8, **caractérisé en ce que** le film de plastique à appliquer peut être ajusté en largeur à la largeur du jonc de fibres au moyen des filières de revêtement ou de l'unité de soufflage.

10. Procédé selon la revendication 1, **caractérisé en ce que**, pour une sortie discontinue de masses plastiques, l'extrudeuse de plastification fonctionne en alternant la mise en marche et l'arrêt.

11. Procédé selon une ou plusieurs des revendications 1 à 10, **caractérisé en ce que** l'extrudeuse de plastification dépose la masse plastique extrudée ou le produit extrudé sur une courroie de transport, s'arrête après une quantité prédéterminée de matière à évacuer, la coupe et l'évacue avant de commencer un nouveau cycle de quantité de matière à évacuer.

12. Extrudeuse de plastification destinée à la fabrication de masses plastiques chargées de fibres comprenant, dans la ligne de transport vers l'extrudeuse de plastification, un radiateur à rayonnement chauffant un jonc de fibres, un dispositif d'imprégnation dans l'extrudeuse de plastification et, pour introduire le jonc de fibres, le tronçonner et le mélanger, une extrudeuse de plastification comprenant un boîtier avec deux alésages et les axes de deux arbres d'extrudeuse entraînés en rotation, une ouverture d'entrée par laquelle un jonc de fibres est introduit dans les alésages étant prévue dans le boîtier, pour mettre en oeuvre le procédé selon la revendication 1 ou 2, **caractérisée en ce que** la longueur (L) de l'extrudeuse de plastification est divisée en une ligne d'entrée et d'imprégnation (m) et en une ligne de sortie et de transport (n), le boîtier (25) pour la ligne d'entrée et d'imprégnation (m) étant pourvu d'alésages cylindriques (2 et 3) dont le diamètre (D) est augmenté d'au moins quatre fois l'épaisseur (S) du jonc de fibres (14), qu'une ou deux filières de revêtement (12 et 13) sont disposées au dessus de l'ouverture d'entrée (18), ladite ouverture d'entrée (18) étant prévue de façon tangentielle au dessus d'un arbre d'extrudeuse (5) de manière à être, en longueur, de préférence parallèle aux axes (6 et 7), que la ligne de sortie et de transport (n) est pourvue en entrée d'une arête tranchante (21) et que ses alésages cylindriques (2' et 3') ont le diamètre (d) d'usage.

13. Extrudeuse de plastification selon la revendication 12, **caractérisée en ce qu'**une extrudeuse de plastification auxiliaire séparée est prévue dans laquelle le plastique de revêtement est destiné à être préparé et acheminé, dans des conduits/tuyaux, vers les filières de revêtement (12/13).

14. Extrudeuse de plastification selon les revendications 12 et 13, **caractérisée en ce que** les arbres de l'extrudeuse (4 et 5) des lignes d'alimentation et d'imprégnation (m) ont des arêtes de vis (9) arrondies, alors que les arêtes de vis (23) de la ligne de sortie et de transport (n) sont de préférence tranchantes.

15. Extrudeuse de plastification selon les revendications 12 à 14, **caractérisée en ce que** l'arête tranchante (21) est prévue sur une douille d'usure (26) remplaçable.

16. Extrudeuse de plastification selon une ou plusieurs des revendications 12 à 15, **caractérisée en ce que** l'extrudeuse de plastification (1) est pourvue d'une zone de préplastification (o) pour préparer le plastique de revêtement, la sortie de ladite zone de préplastification étant reliée à une ou deux filières de revêtement (12/13) par un conduit d'admission (28).

17. Extrudeuse de plastification selon une ou plusieurs des revendications 12 à 16, **caractérisée en ce que** les arbres de vis (2' et 3') de la ligne de sortie et de transport (n) sont pourvus, autour d'une zone d'alimentation (p), d'une ou de plusieurs arêtes de vis (23) s'étendant en amont jusque dans la ligne d'alimentation et d'imprégnation (m).

18. Extrudeuse de plastification selon une ou plusieurs des revendications 12 à 17, **caractérisée en ce que**, en lieu et place d'une zone de préplastification (o), une extrudeuse de plastification auxiliaire séparée est prévue pour l'alimentation des filières de revêtement (12/13).

19. Extrudeuse de plastification selon une ou plusieurs des revendications 12 à 18, **caractérisée en ce qu'**il est possible d'influencer la longueur des fibres dans le produit extrudé par la forme de poches de coupe dans la direction de transport de l'arête tranchante (21).

20. Extrudeuse de plastification selon une ou plusieurs des revendications 12 à 19, **caractérisée en ce que** l'extrudeuse de plastification (1), ou l'extrudeuse de plastification auxiliaire en coopération avec l'extrudeuse de plastification (1), est conçue pour fonctionner en discontinu avec une commande pour un mode de fonctionnement alternant la marche et l'arrêt.

21. Extrudeuse de plastification selon une ou plusieurs des revendications 12 à 20, **caractérisée en ce qu'**un dispositif de coupe (32) destiné à couper le jonc de masse plastique chargée de fibres (33) ou le produit en sortie (33) est prévu sur la filière en sortie (8).

22. Extrudeuse de plastification selon une ou plusieurs des revendications 12 à 21, **caractérisée en ce que** le produit extrudé et tronçonné (33) est destiné à être transporté plus loin sur un convoyeur à bande (34) commandé par un mode de fonctionnement alternant la marche et l'arrêt.
